# EUROPEAN PATENT APPLICATION

(11) **EP 4 625 150 A1**
(43) Date of publication of application: **01.10.2025**
(21) Application number: 24812687.2
(22) Date of filing: 27.11.2024
(51) Int. Cl.: G06F 8/38, G06F 8/35, G06F 8/36, G06F 8/41, G06F 8/72, G06F 9/451, G06F 9/4401

(54) **ELECTRONIC DEVICE AND METHOD FOR MODULARIZING DEVICE DRIVER, AND NON-TRANSITORY COMPUTER-READABLE RECORDING MEDIUM**

(30) Priority: 07.02.2024 KR 20240019239
(71) Applicant: Samsung Electronics Co., Ltd, Suwon-si, Gyeonggi-do 16677 (KR)
(72) Inventor: KIM, Jeehong, Suwon-si Gyeonggi-do 16677 (KR); KIM, Dohyoung, Suwon-si Gyeonggi-do 16677 (KR); KIM, Jeongrae, Suwon-si Gyeonggi-do 16677 (KR); JANG, Kyoungdon, Suwon-si Gyeonggi-do 16677 (KR); CHO, Yongil, Suwon-si Gyeonggi-do 16677 (KR)
(74) Representative: Appleyard Lees IP LLP
(86) International application number: PCT/KR2024/019047
(87) International publication number: WO 2025/170160

(57) **Abstract**

An electronic device is disclosed. The electronic device may include a display, at least one processor comprising processing circuitry, and memory storing instructions. The electronic device may, while displaying, via the display, a user interface for generating a device tree source, DTS, obtain a first input for displaying a plurality of objects representing a respective plurality of hardware configurations. The electronic device may obtain a second input representing connections between the objects. The electronic device may, based on the connections between the objects, update first properties of a device description of each of the objects. The electronic device may, based on the updated device description, update second properties of a device tree source include, DTSI, of each of the objects. The electronic device may generate a DTS including the updated DTSI of each of the objects.

## Description

### [Technical Field]

The disclosure relates to an electronic device, a method, and a non-transitory computer readable storage medium for modularizing a device driver.

### [Background Art]

A device tree may refer to a data structure in which an operating system's kernel describes hardware components for using or managing those hardware components.

A device tree source (DTS) is a file containing text written according to common syntax for a kernel. The DTS may include a device tree source include (DTSI) for one or more devices. The DTS may represent one or more devices as tree nodes. The DTS may indicate one or more devices in which a child node of a root node (e.g., "/") includes a processor.

### [Detailed Description of the Invention]

### [Technical Solution]

Embodiments can address the above technical problems.

An electronic device is disclosed. The electronic device may include a display, at least one processor comprising processing circuitry, and memory including one or more storage mediums, storing instructions. The instructions may, when executed by the at least one processor individually or collectively, cause the electronic device to, while displaying, via the display, a user interface (UI) for generating a device tree source (DTS), obtain a first input for displaying a plurality of objects representing a respective plurality of hardware configurations. The instructions may, when executed by the at least one processor individually or collectively, cause the electronic device to obtain a second input representing connections between the plurality of objects. The instructions may, when executed by the at least one processor individually or collectively, cause the electronic device to, based on the connections between the plurality of objects, update first properties of a device description of each of the plurality of objects. The instructions may, when executed by the at least one processor individually or collectively, cause the electronic device to, based on the updated device description, update second properties of a device tree source include (DTSI) of each of the plurality of objects. The instructions may, when executed by the at least one processor individually or collectively, cause the electronic device to generate a DTS including the updated DTSI of each of the plurality of objects.

A method is disclosed. The method may be performed by an electronic device including a display. The method may include, while displaying, via the display, a user interface (UI) for generating a device tree source (DTS), obtaining a first input for displaying a plurality of objects representing a respective plurality of hardware configurations. The method may include obtaining a second input representing connections between the plurality of objects. The method may include, based on the connections between the plurality of objects, updating first properties of a device description of each of the plurality of objects. The method may include, based on the updated device description, updating second properties of a device tree source include (DTSI) of each of the plurality of objects. The method may include generating a DTS including the updated DTSI of each of the plurality of objects.

A non-transitory computer readable storage medium is disclosed. The non-transitory computer readable storage medium may store a program including instructions. The instructions may, when executed by at least one processor of an electronic device including a display individually or collectively, cause the electronic device to, while displaying, via the display, a user interface (UI) for generating a device tree source (DTS), obtain a first input for displaying a plurality of objects representing a respective plurality of hardware configurations. The instructions may, when executed by the at least one processor individually or collectively, cause the electronic device to obtain a second input representing connections between the plurality of objects. The instructions may, when executed by the at least one processor individually or collectively, cause the electronic device to, based on the connections between the plurality of objects, update first properties of a device description of each of the plurality of obj ects. The instructions may, when executed by the at least one processor individually or collectively, cause the electronic device to, based on the updated device description, update second properties of a device tree source include (DTSI) of each of the plurality of objects. The instructions may, when executed by the at least one processor individually or collectively, cause the electronic device to generate a DTS including the updated DTSI of each of the plurality of objects.

### [Brief Description of the Drawings]

The subject-matter of the present disclosure is best understood with reference to the accompanying figures, in which:
FIG. 1 is a diagram illustrating a prior art device tree source of each of electronic devices 101, 103, and 105.
FIG. 2 is a block diagram of an electronic device 201.
FIG. 3 is a diagram illustrating an operation in which the electronic device 201 generates a device tree source include (DTSI).
FIG. 4 is a diagram illustrating a user interface (UI) for setting a connection relationship between hardware configurations displayed by the electronic device 201,.
FIG. 5 is a diagram illustrating a UI for setting attributes and values between hardware configurations displayed by the electronic device 201.
FIG. 6A illustrates an example of a device tree managed by the electronic device 201.
FIG. 6B is a diagram illustrating a part of a device description of a general purpose input output (GPIO).
FIG. 7A is a diagram illustrating a part of a device description of an application processor (AP).
FIG. 7B is a diagram illustrating a part of a device description of an inter integrated circuit (I2C).
FIG. 7C is a diagram illustrating a part of a device description of a Hall integrated circuit (IC).
FIG. 7D is a diagram illustrating a part of an updated device description of a GPIO.
FIG. 8 is a diagram illustrating a part of a DTSI of a GPIO expander.
FIG. 9 is a diagram illustrating a part of a wrapper code for updating a DTSI of a GPIO expander.
FIG. 10 is a diagram illustrating a part of an updated DTSI of a GPIO.
FIG. 11 is a diagram illustrating a part of an updated DTSI of a GPIO.
FIG. 12 a diagram illustrating an operation of generating, by an electronic device, a device tree source.
FIG. 13 is a flowchart illustrating an operation of an electronic device.
FIG. 14 is a block diagram of a server for providing a service for generating a DTS to an electronic device.
FIG. 15 is a block diagram of an electronic device in a network environment.

### [Mode for Carrying out the Invention]

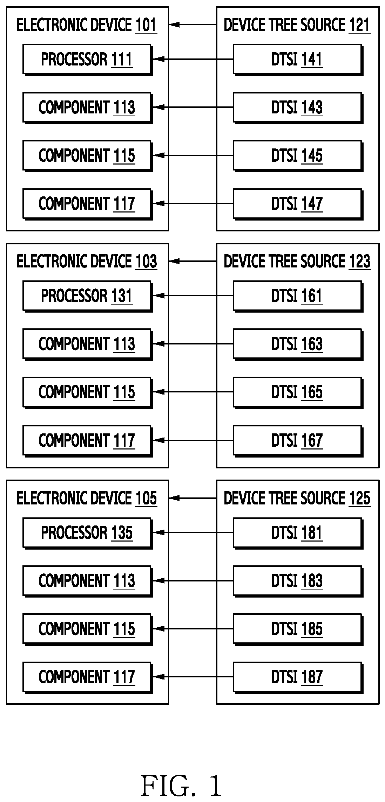

FIG. 1 is a diagram illustrating a device tree source of each of the electronic devices 101, 103, and 105.

Referring to FIG. 1, each of electronic devices 101, 103, and 105 may include different processors 111, 131, or 151. Each of the electronic devices 101, 103, and 105 may include the same components 113, 115, and 117. For example, each of the components 113, 115, and 117 may be an interface (e.g., a bus, a general purpose input and output (GPIO), a serial peripheral interface (SPI), or a mobile industry processor interface (MIPI)), and/or a hardware configuration (e.g., a memory, a battery, a communication circuit, a sensor, a camera, and/or an audio module). However, the disclosure is not limited thereto.

Each of the electronic devices 101, 103, and 105 may include a device tree source (DTS) 121, 123, or 125 for smooth operation of the processors 111, 131, and 151 and the components 113, 115, and 117.

As different processors 111, 131, or 151 are included in each of the electronic devices 101, 103, and 105, a developer of the electronic devices 101, 103, and 105 should write a device tree source include (DTSI) for each of those components 113, 115, and 117. In other words, when the developer writes a DTS of the electronic devices 101, 103, and 105, the developer of the electronic devices 101, 103, and 105 has to write the DTSI for each of the components 113, 115, and 117 according to a certain syntax (e.g., pin configuration) in which a common criterion may not exist. For example, the developer should write the DTSIs 143, 163, and 183 for the component 113, respectively. Further, for example, the developer should write the DTSIs 145, 165, and 185 for the component 115, respectively. Furthermore, for example, the developer should write the DTSIs 147, 167, and 187 for the component 117, respectively.

As the DTSI is written with a different custom syntax for the pin configuration of each device, the device driver developer must newly write a DTSI according to the pin configuration syntax of the device every time each model is developed. This is not only inefficient because the developer must duplicate the same code with various syntaxes, but also causes the inconvenience of having to know all the custom pin configuration syntaxes of each device. This problem is an obstacle to increasing development efficiency through device modularization for manufacturers developing many models with various chipsets. This known development method of writing the DTS of the device module on a model-by-model basis is not only inefficient but also error-prone because the development models are diverse and each model requires the device driver developer to write the same code multiple times in the development environment.

As discussed above, when the same components are included in a large number of electronic devices including different processors, the developer's burden of writing DTSIs included in the DTS may increase. Therefore, there may be a need for a solution to reduce the burden on the developer to write the DTSIs included in the DTS.

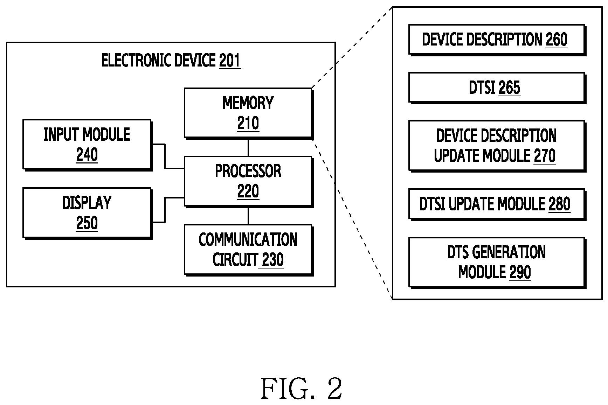

Hereinafter, a solution for reducing the difficulty of writing DTSIs will be described with reference to FIGS. 2 to 14. In the following description, features which are described with reference to examples in parentheses are to be interpreted as optionally including being comprised of or formed of or with one, some or all of such examples.

FIG. 2 is a block diagram of an electronic device 201.

Referring to FIG. 2, the electronic device 201 may include a memory 210, a processor 220, a communication circuit 230, an input module 240, and a display 250.

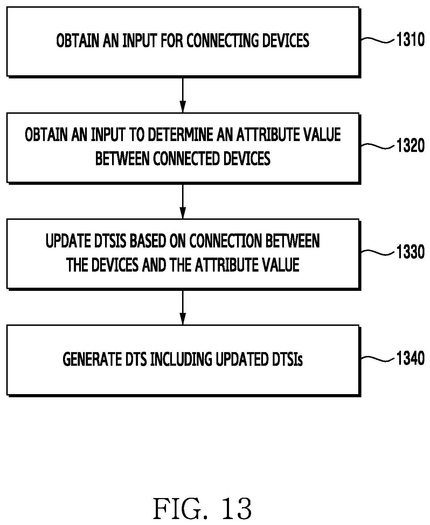

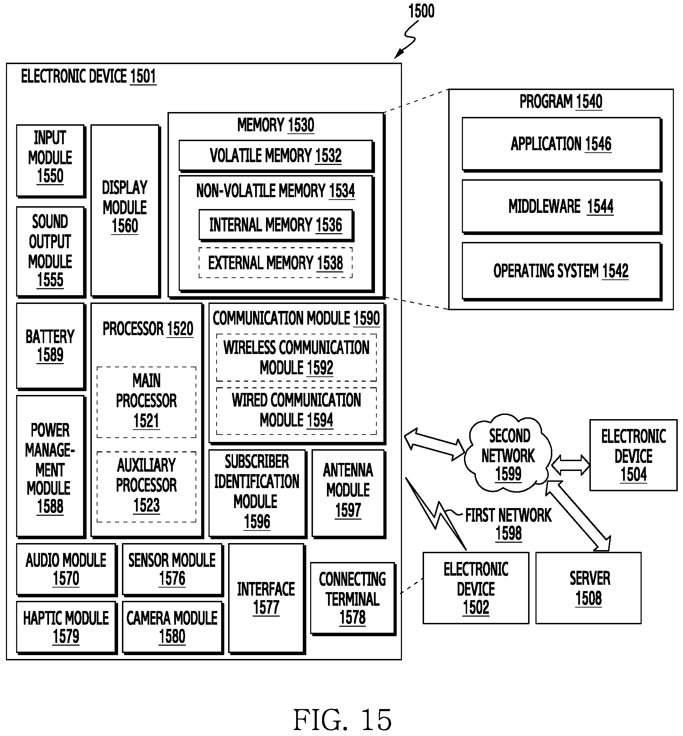

In an embodiment, the memory 210 may store (at least temporarily) instructions for executing operations of the electronic device 201 according to the description of FIG. 13. The instructions may be executed by the processor 220. The instructions may be included in one or more programs stored in the memory 210. For example, the memory 210 may include at least a portion (or at least a portion of a non-volatile memory 1534) of the memory 1530 of FIG. 15 or may correspond to the at least a portion (or at least a portion of the non-volatile memory 1534) of the memory 1530 of FIG. 15. For example, the memory 210 may include a main memory (e.g., random access memory (RAM)), a register for the processor 220, a cache for the processor 220, a register for the communication circuit 230, a buffer (or soft buffer) for the communication circuit 230, and/or an auxiliary memory (e.g., hard disk drive (HDD), solid state drive (SSD)) of the electronic device 201. For example, the memory 210 may be implemented as a single chip or may be implemented as multiple chips. For example, the memory 210 may be implemented as one integrated circuit or may be implemented as a plurality of integrated circuits. For example, the memory 210 may be arranged in a distributed manner in the electronic device 201.

In an embodiment, the processor 220 may be used to execute the operations of the electronic device 201 according to the description of FIG. 13. For example, the processor 220 may include at least a portion of the processor 1520 of FIG. 15 or may correspond to the at least a portion of the processor 1520 of FIG. 15. For example, the processor 220 may include one or more processors including an application processor (AP) and/or a communication processor (CP). For example, the processor 220 may be implemented as a single chip such as a system on chip (SoC) or may be implemented as multiple chips. For example, the processor 220 may be implemented as one integrated circuit or may be implemented as a plurality of integrated circuits. For example, the processor 220 may be arranged in a distributed scheme in the electronic device 201.

In an embodiment, the communication circuit 230 may be used to support wireless communication between the electronic device 201 and another electronic device. For example, the communication circuit 230 may include at least a portion of the communication module 1590 (or the wireless communication module 1592) of FIG. 15 or may correspond to at least a portion of the communication module 1590 (or the wireless communication module 1592) of FIG. 15. For example, the communication circuit 230 may include a communication circuit for a long-distance communication network. For example, the communication circuit 230 may be used to establish a communication link. For example, the communication circuit 230 may be implemented as a single chip or may be implemented as multiple chips. For example, the communication circuit 230 may be implemented as one integrated circuit or may be implemented as a plurality of integrated circuits. For example, the communication circuit 230 may be arranged in a distributed manner in the electronic device 201.

In an embodiment, the input module 240 may be used to obtain (or receive) a user input from an outside (e.g., a user) of the electronic device 201. The input module 240 may be, for example, a microphone, a mouse, a keyboard, a key (e.g., a button), or a digital pen (e.g., a stylus pen). However, the disclosure is not limited thereto.

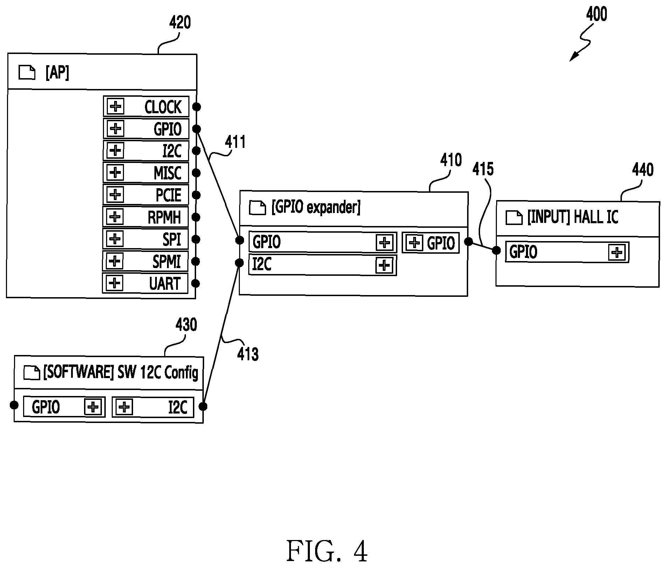

In an embodiment, the display 250 may include at least a portion of the display module 1560 of FIG. 15 or may correspond to at least a portion of the display module 1560 of FIG. 15. In an embodiment, the display 250 may display a user interface (UI) (e.g., a UI 400 of FIG. 4). In an embodiment, the UI (e.g., the UI 400 of FIG. 4) may be a UI (or an execution screen of an application) for generating a device tree source (DTS).

Referring to FIG. 2, the memory 210 may include a device description 260, a device tree source include (DTSI) 265, a device description update module 270, a DTSI update module 280, and a device tree source (DTS) generation module 290.

In an embodiment, the device description 260 may be a dictionary type of data file including a pair of key (or attribute) values. In an embodiment, the device description 260 may include a plurality of objects. For example, the plurality of objects may include a header, a build, and an interface.

In an embodiment, the header may include hardware configuration information (e.g., name, unique identification information, manufacturer information) described by the device description 260.

In an embodiment, the build may include mapping information with a kernel of the processor 220. For example, the build may include location information ('path') of a repository of a source code of the hardware configuration, information ('file') indicating a file name of the device description 260, and file-related information ('location'). For example, the file-related information ('location') may include information on a file (or a file to be copied) ('src') required to build a driver source code of the hardware configuration, and a copy location ('dst') of the file.

In an embodiment, the interface may include input information ('inports') and output information ('outports') of a pin required by the DTSI 265. In an embodiment, each of the input information ('inports') and the output information ('outports') of the interface may include connection type information ('type') and port information ('labels'). In an embodiment, the port information ('labels') may include a port name ('label'), a symbol ('symbol'), and a parent ('parent') indicating a symbol to be used as (parent) phandle in a device tree.

In an embodiment, the DTSI 265 may be an include file included in the DTS file. For example, the DTSI 265 may include an SoC-level of definition. For example, the DTSI 265 may be a file created based on a device tree syntax. For example, the device tree may be a tree structure including kernel-level of information about a hardware configuration. For example, the device tree may include characteristics of a hardware configuration, connections between hardware configurations, and/or configuration information of a hardware configuration.

In an embodiment, the DTSI 265 (or device tree source, DTS) may be written based on its unique syntax. A common standard syntax may not be conventionally available for a pin configuration node (e.g., a node indicating input information ('inports') and/or output information ('outports')). A pin configuration node of hardware configurations refers to a pin configuration content of a pin control device (e.g., an AP or SoC). Accordingly, with the AP (or SoC) in which the hardware configuration is controlled, the context (or setting and/or value) of the pin configuration node may be different from each other, even if their hardware configurations are the same. Accordingly, a standardized syntax for the pin configuration node may be required for a modularized DTSI 265. To this end, a wrapper code (e.g. a configuration wrapper macro) may be used. For example, the wrapper code may be written for each of APs (or vendor of APs) having the same pin setting grammar (or syntax). A wrapper can comprise code that provides an interface to another component, typically to allow easy integration and interaction with the wrapped functionality.

In an embodiment, the device description update module 270 may update the device description 260 based on an input. For example, the input may be an input obtained through the input module 240.

In an embodiment, the DTSI update module 280 may update the DTSI 265, based on the updated device description 320. In an embodiment, the DTS generation module 290 may generate a DTS including the updated DTSI 265.

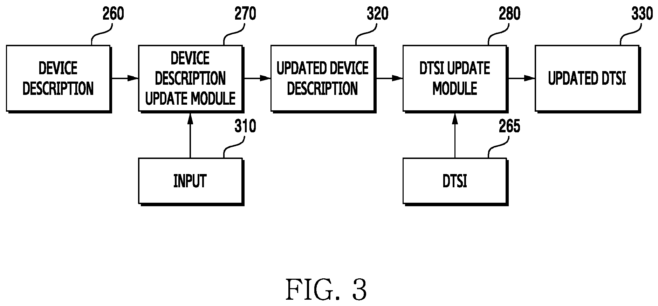

Hereinafter, an operation of generating a DTS by the electronic device 201 will be described with reference to FIGS. 3 to 12.

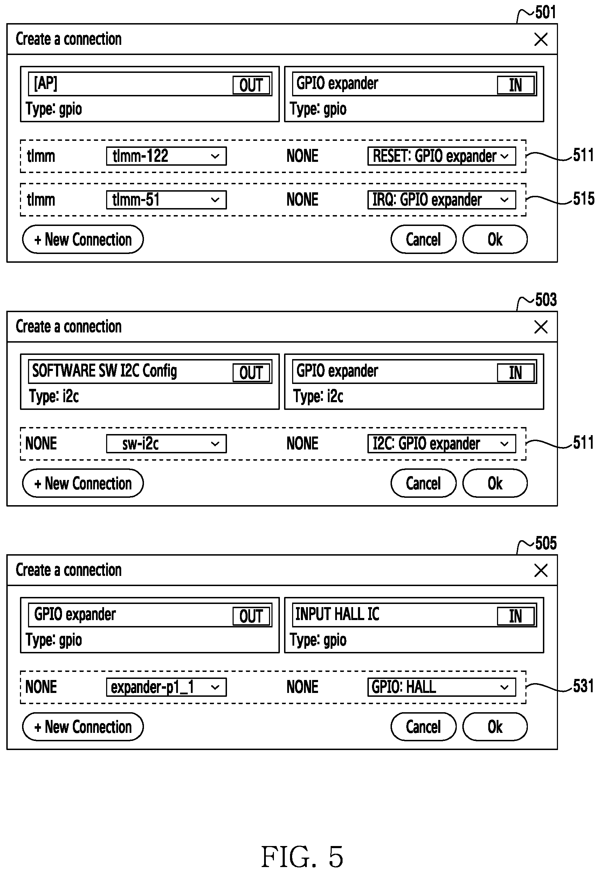

FIG. 3 is a diagram illustrating an operation of generating a device tree source include (DTSI) by the electronic device 201. FIG. 4 is a diagram illustrating a user interface (UI) for establishing a connection relationship between hardware configurations displayed by the electronic device 201. FIG. 5 is a diagram illustrating a UI for setting attributes and values between hardware configurations displayed by the electronic device 201.

Referring to FIG. 3, the device description update module 270 may update the device description 260 of each of the hardware configurations, based on an input 310. For example, the input 310 may be an input obtained through the input module 240. For example, the input 310 may be a touch input obtained through the display 250. However, the disclosure is not limited thereto.

For example, referring to FIG. 4, the device description update module 270 may obtain an input 310 to a UI 400 being displayed through the display 250. For example, the input 310 may include an input (e.g., drag and drop) for positioning at least one object in the UI 400. For example, the object may include an object 410 indicating a hardware configuration (e.g., a general purpose input output (GPIO) expander) for connection, an object 420 indicating an application processor (AP), an object 430 indicating a hardware configuration (e.g., a software (SW) inter integrated circuit (I2C)) for connection, or an object 440 indicating a sensor (e.g., a Hall integrated circuit (IC)). For example, the input 310 may be an input for connecting between objects. For example, the input 310 may be an input for generating a connection 411 between the object 410 and the object 420. For example, the input 310 may be an input for generating a connection 413 between the object 420 and the object 430. For example, the input 310 may be an input for generating a connection 415 between the object 420 and the object 440. However, the disclosure is not limited thereto.

For example, the device description update module 270 may generate a connection 411 between an inport (e.g., a GPIO pin) of the object 410 and an outport (e.g., a GPIO pin) of the object 420, via the input 310. For example, referring to FIG. 5, the device description update module 270 may display a UI 501 for setting an attribute of the connection 411, based on the connection 411 being generated. For example, the device description update module 270 may update the attribute and/or value of the object 410 of the device description 260, based on the input 310 obtained through the UI 501.

For example, the device description update module 270 may add (or update) a statement for an attribute ('usrval') and a value ('tlmm-122') to an inport object (e.g., RESET: GPIO expander) of the device description 260 related to the object 410, through the input 310 to the UI 501.

For example, through the input 310 to the UI 501, the device description update module 270 may update the device description 260 such that a value ('${AAA_reset_gpio_parent}') of the attribute ('parent') of the inport object (e.g., RESET: GPIO expander) of the device description 260 related to the object 410 refers to the value ('tlmm') of the attribute ('parent') of the object including the value ('tlmm-122') of the attribute ('label') among the outport objects of other device description related to the object 420.

For example, through the input 310 to the UI 501, the device description update module 270 may update the device description 260 such that the value ('${AAA_reset_gpio}') of the attribute ('symbol') of the inport object (e.g., RESET: GPIO expander) of the device description 260 related to the object 410 refers to the value ('AP,tlmm,122') of the attribute ('value') of the object including the value ('tlmm-122') of the attribute ('label') among the outport objects of other device description related to the object 420.

For example, the device description update module 270 may add (or update) a statement for the attribute ('usrval') and the value ('tlmm-51') to the inport object (e.g., IRQ: GPIO expander) of the device description 260 related to the object 410, through the input 310 to the UI 501.

For example, through the input 310 to the UI 501, the device description update module 270 may update the device description 260 such that the value ('${AAA_irq_gpio_parent}') of the attribute ('parent') of the inport object (e.g., IRQ: GPIO expander) of the device description 260 related to the object 410 refers to the value ('tlmm') of the attribute ('parent') of the object including the value ('timm-51') of the attribute ('label') among the outport objects of other device description related to the object 420.

For example, through the input 310 to the UI 501, the device description update module 270 may update the device description 260 such that the value ('${AAA_irq_gpio}') of the attribute ('symbol') of the inport object (e.g., IRQ: GPIO expander) of the device description 260 related to the object 410 refers to the value ('AP,tlmm,122') of the attribute ('value') of the object including the value ('tlmm-51') of the attribute ('label') among the outport objects of other device description related to the object 420.

For example, the device description update module 270 may generate the connection 413 between the inport (e.g., an I2C pin) of the object 410 and the outport (e.g., an I2C pin) of the object 430, through the input 310. For example, referring to FIG. 5, the device description update module 270 may display a UI 503 for setting an attribute of the connection 413, based on generation of the connection 413. For example, the device description update module 270 may update the attribute and/or value of the object 410 of the device description 260 based on the input 310 obtained through the UI 503.

For example, the device description update module 270 may add (or update) a statement for an attribute ('usrval') and a value ('sw-i2c_3') to the inport object (e.g., IRQ: GPIO expander)) of the device description 260 related to the object 410, through the input 310 to the UI 503.

For example, through the input 310 to the UI 503, the device description update module 270 may update the device description 260 such that the value ('${AAA _i2c}') of the attribute ('symbol') of the inport object (e.g., I2C: GPIO expander) of the device description 260 related to the object 410 refers to the value ('sw_i2c_3') of the attribute ('symbol') of the object including the value ('sw-i2c') of the attribute ('label') among the outport objects of other device description related to the object 430.

For example, the device description update module 270 may generate the connection 415 between the outport (e.g., the GPIO pin) of the object 410 and the inport (e.g., the GPIO pin) of the object 440, via the input 310. For example, referring to FIG. 5, the device description update module 270 may display a UI 505 for setting an attribute of the connection 415, based on generation of the connection 415. For example, the device description update module 270 may update the attributes and/or the values of the object 410 and the object 440 of the device description 260, based on the input 310 obtained through the UI 505.

For example, the device description update module 270 may add (or update) a statement for an attribute ('usrval') and a value ('expander-p1_1') to the inport object (e.g., GPIO: HALL) of other device description related to the object 440, through the input 310 to the UI 505.

For example, through the input 310 to the UI 505, the device description update module 270 may update other device description related to the object 440 such that the value ('${hall_parent}') of the attribute ('parent') of the inport object (e.g., GPIO: HALL) of other device description related to the object 440 refers to the value ('gpio_expander') of the attribute ('parent') of the object including the value ('expander-p1_1') of the attribute ('label') among the outport objects of the device description 260 related to the object 410.

For example, through the input 310 to the UI 505, the device description update module 270 may refer to other device description related to the object 440 such that the value ('${hall_gpio}') of the attribute ('symbol') of the inport object (e.g., IRQ: GPIO: HALL) of the device description 260 related to the object 410 refers to the value ('EXP, gpio_expander, 9') of the attribute ('value') of the object including the value ('expander-p1_1') of the attribute ('label') among the outport objects of the device description 260 related to the object 410.

Hereinafter, the attribute of the device description 260 updated by the device description update module 270 based on the connections 411, 413, and 415 between the objects 410, 420, 430, and 440 may be referred to as a first attribute.

In an embodiment, the DTSI update module 280 may update the DTSI 265, based on the updated device description 320. In an embodiment, the DTSI update module 280 may change the values of the attributes of the DTSI 265 to the values of the attributes included in the updated device description 320.

For example, the DTSI update module 280 may update the value ('${AAA_irq_gpio_parent}') of the DTSI 265 to the value ('tlmm') included in the updated device description 320. For example, the DTSI update module 280 may update the value ('${AAA _irq_gpio}') of the DTSI 265 to the value ('AP, tlmm, 122') included in the updated device description 320. For example, the DTSI update module 280 may update the value ('${AAA_i2c}') of the DTSI 265 to the value ('sw_i2c_3') included in the updated device description 320.

For example, the DTSI update module 280 may update a value ('${hall_parent}') of another DTSI of the object 440 to a value ('gpio_expander') included in the updated device description 320. For example, the DTSI update module 280 may update the value ('${hall_gpio}') of the other DTSI of the object 440 to a value ('EXP, gpio_expander, 9') included in the updated device description 320.

Hereinafter, the attribute of the DTSI 265 updated by the DTSI update module 280 with reference to the attribute (or a value of the attribute) of the updated device description 320 may be referred to as a second attribute.

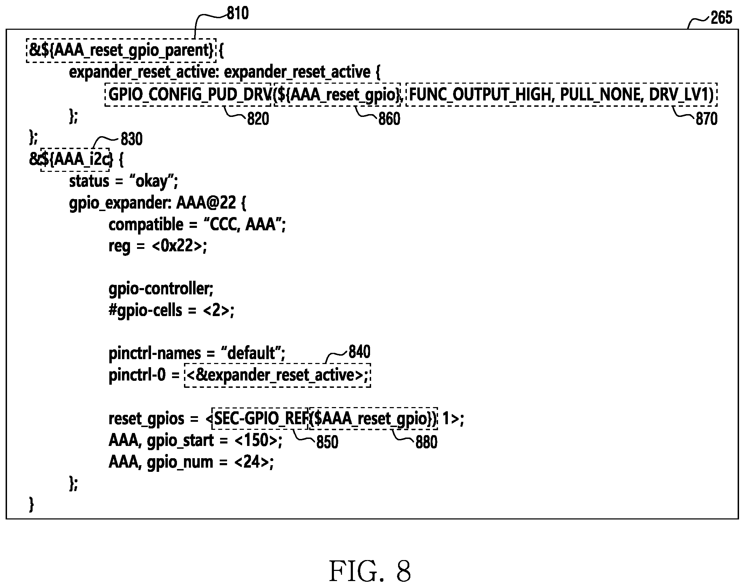

For example, the DTSI update module 280 may update the DTSI 265 through the updated device description 320 and then additionally update the same through a wrapper. For example, the DTSI update module 280 may additionally update the updated DTSI 265 through the wrapper. For example, the DTSI update module 280 may update the DTSI 265 of which values are updated based on the wrapper, based on the driver (or a driver source code) for the object 410 being built. An operation of the DTSI update module 280 updating the DTSI 265 through the wrapper will be described below with reference to FIGS. 8 to 11.

Hereinafter, the attribute of the DTSI 265 updated by the DTSI update module 280 through the wrapper may be referred to as a third attribute.

In an embodiment, the DTS generation module 290 may generate a DTS file including the updated DTSI 330 generated through the DTSI update module 280. For example, as the DTS file is built, a device tree blob (DTB) may be generated.

As described above, the electronic device 201 may configure (or update) the attribute-value of the device description 260 of each of the hardware configurations, connecting the hardware configurations by using the block coding technique. In addition, the electronic device 201 may update the DTSI 265 of each of the hardware configurations, using the updated attribute-value of the device description 260 of each of the configured hardware configurations. Accordingly, a developer (or a user) may more conveniently generate a DTSI of each of hardware configurations connected to different APs, with a simple input (e.g., drag and drop). Accordingly, the electronic device 201 may reduce the burden to create a new DTSI when the developer (or user) develops a product.

As described above, the electronic device 201 may modularize the DTSI, by declaring an attribute value (e.g., GPIO, I2C) that requires reference to different information for each AP (or vendor) as a symbol (e.g., ${AAA reset_gpio_parent}, ${AAA _reset_gpio}, ${AAA_i2c}) and then having necessary information (or value) (e.g., tlmm, pinctrl_0) be referenced for each connected hardware configuration.

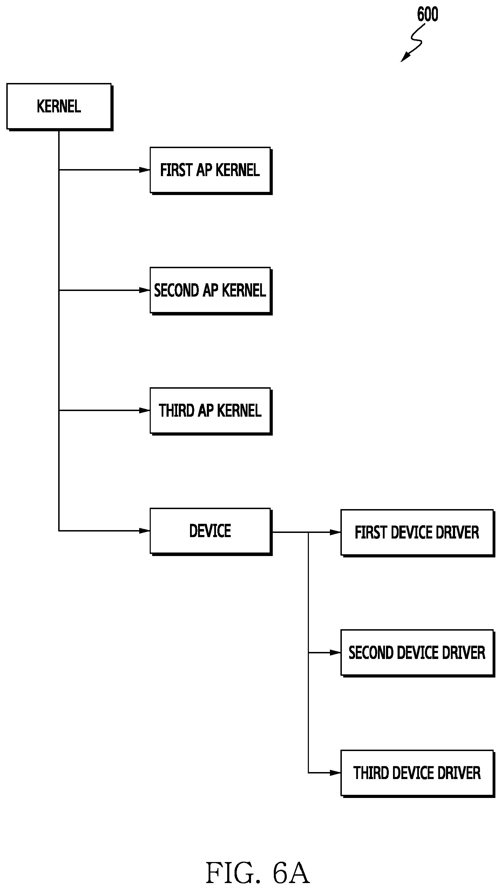

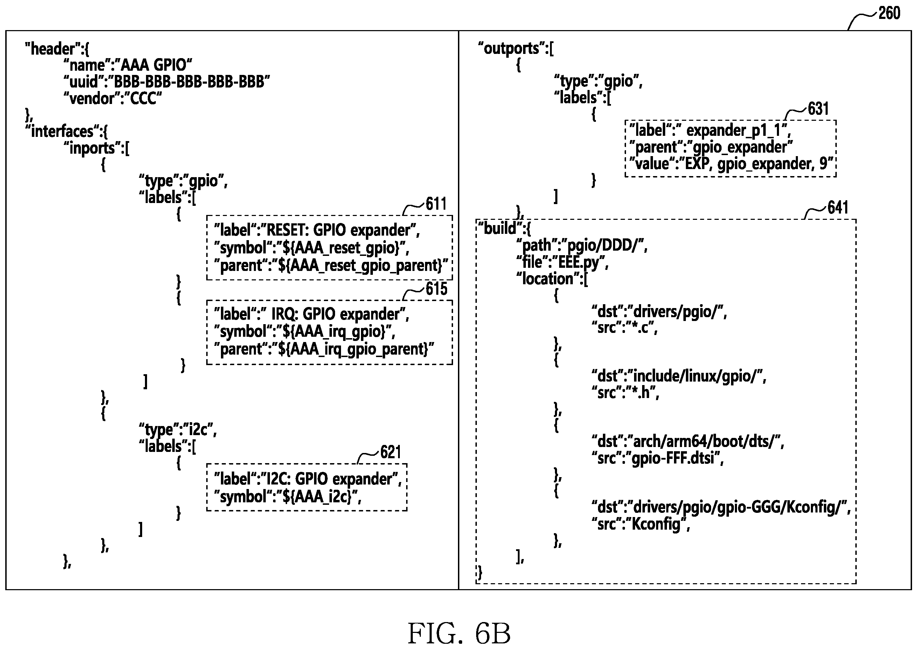

FIG. 6A illustrates an example of a device tree managed by the electronic device 201. FIG. 6B is a diagram illustrating a part of a device description of a general purpose input output (GPIO).

Referring to a device tree 600 of FIG. 6A, nodes for a plurality of device drivers may be located at a lower node of a device node. For example, the nodes for a plurality of device drivers may be located at another independent node rather than a lower node of an AP (or AP kernel). For example, the nodes for a plurality of device drivers may be located at a lower node of a sibling node of a node of an AP (or an AP kernel). In order to build such a structure of device tree 600, connection information with the AP kernel and the device description 260 of each of the device drivers may be required. By employing the device tree 600 with such a structure, fragmentation of source code (e.g., DTS) may be reduced (or prevented), and ease of management may be increased.

Referring to FIG. 6B, the device description 260 may include a header, a build, and an interface.

In an embodiment, the header may include hardware configuration information (e.g., a name (e.g., AAA GPIO)), unique identification information (e.g., 'uuid'), and manufacturer information (e.g., 'vendor')) described by the device description 260.

In an embodiment, the build 641 may include mapping information with a kernel (or AP kernel of FIG. 6A) of the processor 220. For example, the build 641 may include information ('path' and 'pgio/DDD/') on location of a repository of the source code of the hardware configuration, information ('file' and 'EEE.py') indicating the file name of the device description 260, and information ('location') related to the file. For example, the file-related information ('location') may include information on a file (or a file to be copied) ('src') required to build a driver source code of the hardware configuration, and a copy location ('dst') of the file.

In an embodiment, the interface may include input information ('inports') and output information ('outports') of pins required by the DTSI 265. In an embodiment, the input information ('inports') and the output information ('outports') of the interface may include connection type information ('type') and port information ('labels'), respectively. In an embodiment, the port information ('labels') may include a name ('label') of the port, a symbol ('symbol'), and a parent ('parent') indicating a symbol to be used as (parent) phandle in the device tree. For example, the interface may include port information 611 about RESET: GPIO expander, port information 613 about IRQ: GPIO expander, port information 621 about I2C: GPIO expander, and port information 631 about expander_p1_1.

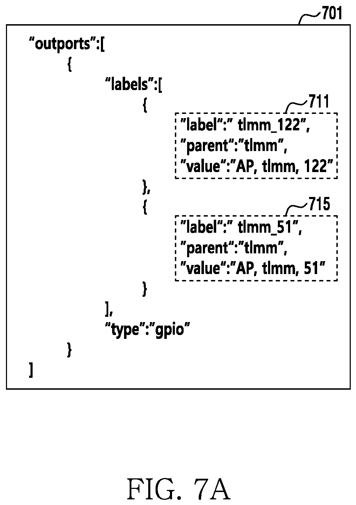

FIG. 7A is a diagram illustrating a part of a device description of an application processor (AP).

FIG. 7A illustrates a part of the interface amongst the device description of the AP.

In an embodiment, the interface 701 of the device description of the AP may include output information ('outports') of pins required in the DTSI. In an embodiment, each of the output information ('outports') of the interface 701 may include connection type information ('type') and port information ('labels'). In an embodiment, the port information ('labels') may include a name ('label') of a port, a parent ('parent') indicating a symbol to be used as (parent) phandle in a device tree, and a value ('value'). For example, the interface 701 may include port information 711 about 'tlmm_122' and port information 715 for about "tlmm_51".

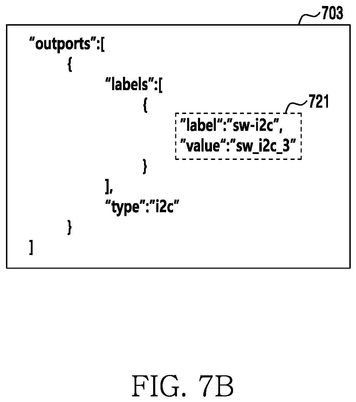

FIG. 7B is a diagram illustrating a part of a device description of an inter integrated circuit (I2C).

FIG. 7B illustrates a part of the interface amongst the device description of the I2C.

In an embodiment, the interface 703 of the device description of I2C may include output information ('outports') of pins required in the DTSI. In an embodiment, the output information ('outports') of the interface 703 may include connection type information ('type') and port information ('labels'), respectively. In an embodiment, the port information ('labels') may include a name ('label') of a port and a value ('value'). For example, the interface 703 may include port information 721 about the 'sw-i2c'.

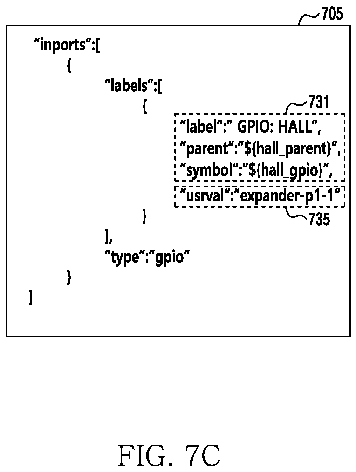

FIG. 7C is a view illustrating a part of a device description of a Hall integrated circuit (IC).

FIG. 7C illustrates a part of the interface amongst the device description of the Hall IC.

In an embodiment, the interface 705 of the device description of the Hall IC may include input information ('inports') of pins required in the DTSI. In an embodiment, each of the input information ('inports') of the interface 705 may include connection type information ('type') and port information ('labels'). In an embodiment, the port information ('labels') may include a name ('label') of a port, a symbol ('symbol'), and a parent ('parent') indicating a symbol to be used as (parent) phandle in a device tree. For example, the interface 705 may include port information 731 about GPIO: HALL. For example, a statement 735 for an attribute ('usrval') and a value ('expander-p1-1') may be added to the interface 705, based on the Hall IC and the GPIO expander being connected to each other.

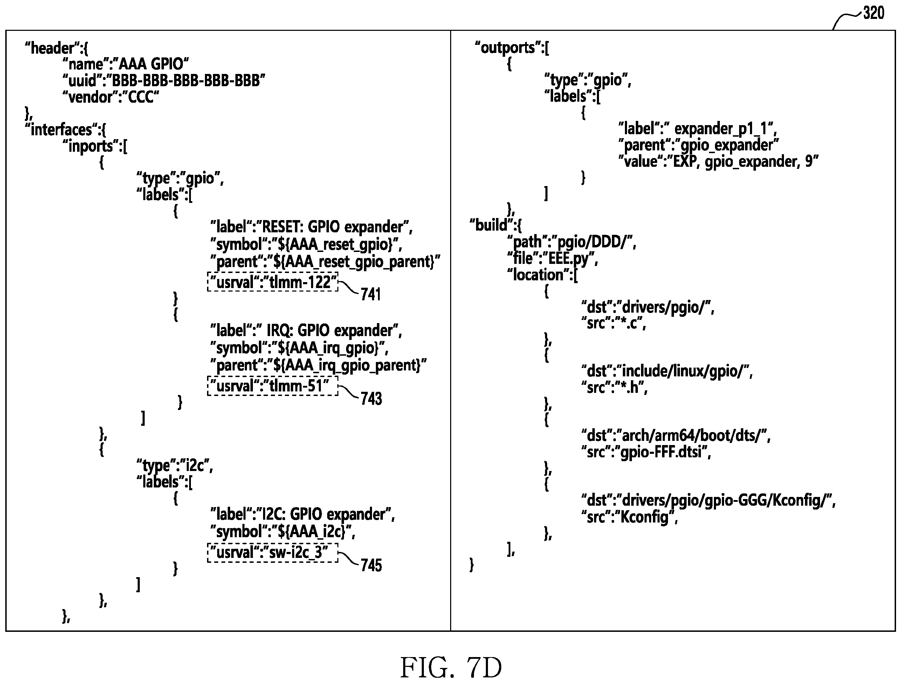

FIG. 7D is a diagram illustrating a part of an updated device description of a GPIO.

FIG. 7D illustrates an updated device description 320 based on the device description according to FIGS. 7A to 7C.

For example, the updated device description 320 may be updated by a connection between a GPIO expander and an AP, a connection between the GPIO expander and an SW I2C, and a connection between the GPIO expander and a Hall IC.

Referring to FIG. 7D, a statement 741 for an attribute ('usrval') and a value ('tlmm-122') of an inport object (e.g., RESET: GPIO expander) may be added to the updated device description 320 related to the object 410. For example, in the updated device description 320 related to the object 410, a statement 743 for an attribute ("usrval") and a value ("tlmm-51") may be added to an inport object (e.g., IRQ: GPIO expander)). For example, in the updated device description 320 related to the object 410, a statement 745 for an attribute ("usrval") and a value ("sw-i2c_3") may be added to the inport object (e.g., IRQ: GPIO expander).

FIG. 8 is a diagram illustrating a part of a DTSI of a GPIO expander.

Referring to FIG. 8, the DTSI 265 may include an attribute (or a symbol). For example, the attribute may be updated through the updated device description 320 and/or the wrapper code. For example, the attribute may be a statement declared as a symbol.

For example, the attribute updated through the updated device description 320 may include ${AAA_reset_gpio_parent}810, ${AAA_i2c}830, and ${AAA_reset_gpio} (860, 880). Here, 'AAA' may be a name of the GPIO expander. For example, the attribute updated through the updated device description 320 may be summarized as shown in Table 1 below.

**<Table 1>**

| Symbol | First Value | Second Value |
|---|---|---|
| ${AAA_reset_gpio_parent} | Tlmm | pinctrl_0 |
| ${AAA_reset_gpio} | APtlmm, 122 | AP,gpf1,gpf1,0 |
| ${AAA_i2c} | sw_i2c3 | hsi2c_0 |

In Table 1, the first value or the second value may be a value of attributes indicated by the object (420, 430, 440) connected to the object 410, which is referred to by a symbol (e.g., '${AAA_reset_gpio_parent}') of the object 410. For example, as the object 410 is connected to the object 420 of a first AP (or a first vendor) through the input 310 to the UI 501, the value ('${AAA_reset_gpio_parent}') of the device description 260 may refer to the first value rather than the second value. For example, as the object 410 is connected to the object of a second AP (or a second vendor) through the input 310 to the UI 501, the value ('${AAA_reset_gpio_parent}') of the device description 260 may refer to the second value rather than the first value. For example, the device description update module 270 may refer to a value corresponding to identification information (e.g., uuid) or vendor information (e.g., vendor) of a hardware configuration indicated by the objects (420, 430, 440) connected to the object 410. However, the disclosure is not limited thereto.

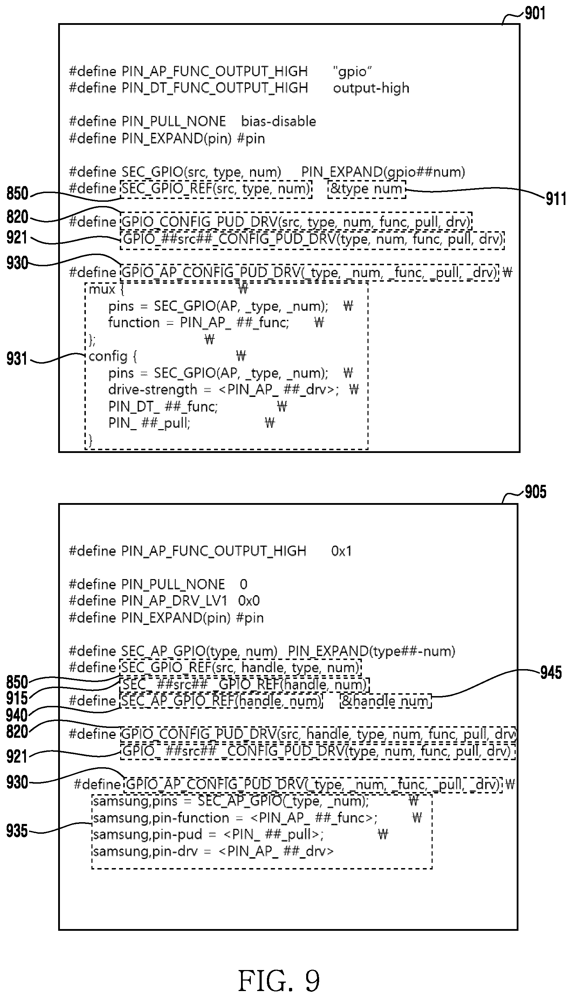

For example, the attribute updated through the wrapper code may include GPIO_CONFIG_PUD_DRV 820, FUNC_OUTPUT_HIGH, PULL_NONE, DRV_LV1 870, &expander _reset_active 850, and SEC-GPIO_REF 850. The updating of the attribute through the wrapper code may be described with reference to FIGS. 9 to 11.

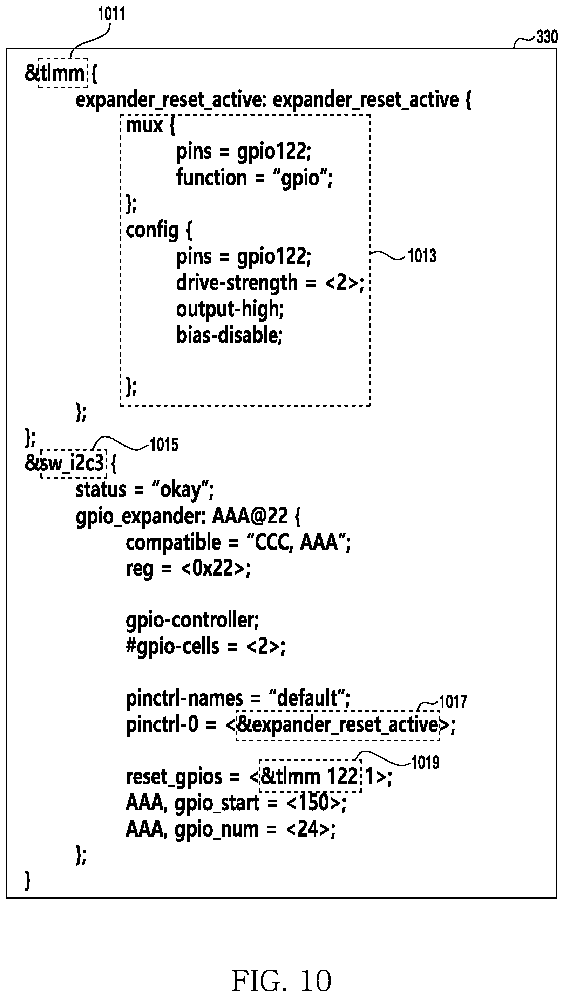

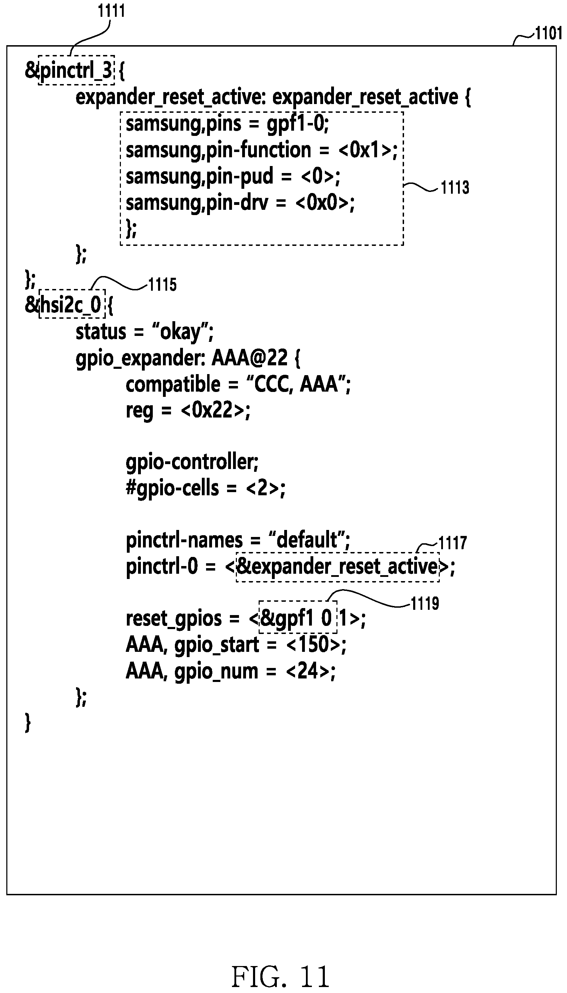

FIG. 9 is a diagram illustrating a part of a wrapper code for updating a DTSI of a GPIO expander. FIG. 10 is a diagram illustrating a part of an updated DTSI of a GPIO. FIG. 11 is a diagram illustrating a part of an updated DTSI of a GPIO.

Referring to FIG. 9, for the DTSI 265 of an arbitrary hardware configuration (e.g., a GPIO expander), wrapper codes 901 and 905 for each of hardware configurations (e.g., a plurality of APs, a plurality of Hall ICs, and a plurality of I2Cs) connectable to an arbitrary hardware configuration may exist. For example, the wrapper code 901 may be a wrapper code for connection between an arbitrary hardware configuration (e.g., a GPIO expander) and the first AP. For example, the wrapper code 905 may be a wrapper code for connection between an arbitrary hardware configuration (e.g., a GPIO expander) and the second AP. However, the disclosure is not limited thereto. For example, the wrapper code 901 may be a wrapper code configured for a manufacturer of the first AP connected to an arbitrary hardware configuration (e.g., a GPIO expander). For example, the wrapper code 905 may be a wrapper code configured for a manufacturer of the second AP connected to an arbitrary hardware configuration (e.g., a GPIO expander). For example, the DTSI update module 280 may determine a wrapper code corresponding to identification information (e.g., 'uuid') or vendor information (e.g., 'vendor') of hardware configuration indicated by the object (420, 430, 440) connected to the object 410 amongst a plurality of wrapper codes 901 and 905 for the object 410.

Referring to the wrapper codes 901 and 905 of FIG. 9, it may be defined (#define) that an attribute (e.g., 'PIN_AP_FUNC_OUTPUT_HIGH') is substituted with a specified value (e.g., gpio or 0x1).

When comparing the wrapper codes 901 and 905 of FIG. 9, values substituted for the same attribute may be different from each other. For example, values 911 and 915 substituted for an attribute 850 of the wrapper codes 901 and 905 may be different from each other. For example, values 931 and 935 substituted for an attribute 930 of the wrapper codes 901 and 905 may be different from each other. However, the disclosure is not limited thereto. When comparing the wrapper codes 901 and 905 of FIG. 9, the values substituted for the same attribute may be the same as each other. For example, values 921 substituted for an attribute 820 of the wrapper codes 901 and 905 may be the same as each other.

When comparing the wrapper codes 901 and 905 of FIG. 9, the number of times a value is substituted for the same attribute may be different. For example, the number of times a value is substituted for the attribute 850 of the wrapper code 901 may be one, and the number of times a value is substituted for the attribute 850 of the wrapper code 905 may be two. For example, the attribute 850 of the wrapper code 901 may be directly substituted with a value 911, while the attribute 850 of the wrapper code 905 may be substituted with a value 915, and then the value 915 may be finally substituted with another value 945 by an attribute 940 and the other value 945.

The updated DTSI 265 of FIG. 10 may be a DTSI updated through the updated device description 320 and the wrapper code 901.

Referring to FIG. 10, it can be seen that, by the updated device description 320, ${AAA_reset_gpio_parent} 810, ${AAA_i2c} (830), and ${AAA_reset_gpio} (860, 880) are substituted with tlmm (1011), sw_i2c3 (1015), and tlmm 122 (1019), respectively.

Referring to FIG. 10, it can be seen that by the wrapper code 901, a value 931 substituted with an attribute 820, an attribute 870, and a value (e.g., the value tlmm 122 substituted from ${AAA_reset_gpio} 860) is substituted with an object 1013 including attributes (mux, config, pins, functions, drive-strength, output, bias) and values (gpio122, gpio, <2>, high, disable).

The updated DTSI 1101 of FIG. 11 may be an DTSI updated through the updated device description 320 and the wrapper code 905.

Referring to FIG. 11, it can be seen that, by the updated device description 320, ${AAA_reset_gpio_parent} (810), ${AAA_i2c} (830), and ${AAA_reset_gpio} (860, 880) are substituted with pinctrl_3 (1111), hsi2c_0 (1115), and gpf1 0 (1019), respectively.

Referring to FIG. 11, it can be seen that, by the wrapper code 905, a value 935 substituted with the attribute 820, the attribute 870, and the value (e.g., the value (gpf1 0) substituted from ${AAA _reset_gpio} (860)) is substituted with an object 1113 including the attributes (pins, pin-function, pin-pud, pin-drv) and the values (gpf1-0, <0x1>, <0>, <0x0>).

As described above, the electronic device 201 may reduce resource input of the developer (or user) required to generate the DTSI 265 as shown in FIG. 10 and the DTSI 1101 as shown in FIG. 11. For example, the DTSI 265 as shown in FIG. 10 and the DTSI 1101 as shown in FIG. 11 may be created through the input 310 for selection (or drag and drop) of the objects 410, 420, 430, and 440 and the connections 411, 413, and 415 between the objects 410, 420, 430, and 440 through the UI 400, and the input 310 for definition of the attributes of the connections 411, 413, and 415 through the UIs 501, 503, and 505, so that the developer's (or user) efforts required to create DTSIs for a GPIO expander connected to different APs may be reduced.

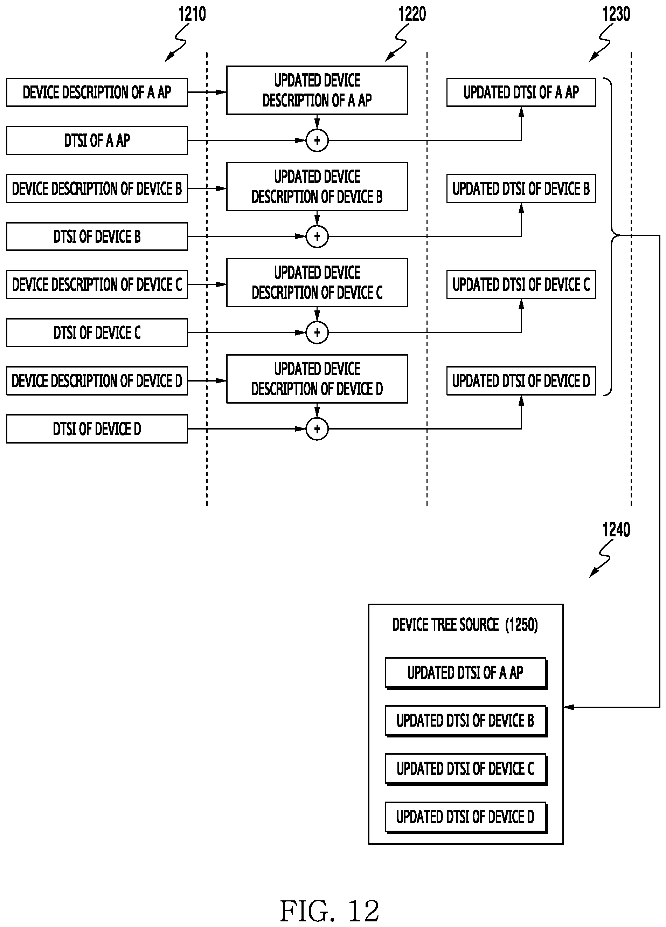

FIG. 12 is a diagram illustrating an operation of generating, by an electronic device, a device tree source.

Referring to FIG. 12, in a first situation 1210, the electronic device 201 may store a device description of A AP, a DTSI of A AP, a device description of a device B, a DTSI of a device B, a device description of a device C, a DTSI of a device C, a device description of a device D, and a DTSI of a device D.

In the first situation 1210, the electronic device 201 may obtain an input 310 for updating the device descriptions. In an embodiment, the input 310 may be an input for selecting (e.g., drag and drop) an object (e.g., the object 420) indicating AP A, an object (e.g., the object 410) indicating the device B, an object (e.g., the object 430) indicating the device C, and an object (e.g., the object 440) indicating the device D, through the UI 400. In an embodiment, the input 310 may be an input for generating a connection (e.g., the connection 411, 413, 415) between an object (e.g., the object 420) indicating AP A, an object (e.g., the object 410) indicating the device B, an object (e.g., the object 430) indicating the device C, and an object (e.g., the object 440) indicating the device D, through the UI 400. In an embodiment, the input 310 may be an input for setting an attribute and a value of each connection (e.g., the connection 411, 413, 415) through the UIs 501, 503, and 505.

In a second situation 1220, the electronic device 201 may generate the updated device descriptions as the updating of the device descriptions is completed.

In the second situation 1220, the electronic device 201 may update the DTSIs based on the updated device descriptions. For example, the electronic device 201 may update the attributes of the DTSIs through the updated device descriptions and/or wrapper codes. For example, the wrapper code for updating the DTSI may be identified by connected hardware configurations of a plurality of wrapper codes for the DTSI. For example, the electronic device 201 may update the DTSI of the device B (e.g., the GPIO expander), based on the wrapper code for the device B (e.g., the GPIO expander) and AP A by the connection 411 among the wrapper code for the device B (e.g., the GPIO expander) and AP A, and the wrapper code for the device B (e.g., the GPIO expander) and AP XXX.

In a third situation 1230, as the update of the DTSIs is completed, the electronic device 201 may generate the updated DTSIs.

In a fourth situation 1240, the electronic device 201 may generate a device tree source 1250, based on the updated DTSIs. For example, the electronic device 201 may generate the device tree source 1250 including hardware configurations included in a product and the updated DTSIs corresponding to the connections between the hardware configurations.

FIG. 13 is a flowchart illustrating an example operation of an electronic device.

FIG. 13 may be described with reference to FIGS. 2 to 5.

Some of the operations of FIG. 13 may be omitted in some cases. Execution sequence of some of the operations of FIG. 13 may be changed.

Referring to FIG. 13, in operation 1310, the electronic device 201 may obtain an input for connecting devices. For example, the input 310 may be an input obtained through an input module 240. For example, the input 310 may be a touch input obtained through a display 250. However, the disclosure is not limited thereto.

In an embodiment, the electronic device 201 may obtain the input 310 for a UI 400 being displayed through the display 250. For example, the input 310 may include an input (e.g., drag and drop) for positioning at least one object in the UI 400. For example, the object may include an object 410 indicating a hardware configuration (e.g., a general purpose input output (GPIO) expander) for connection, an object 420 indicating an application processor (AP), an object 430 indicating a hardware configuration (e.g., a software (SW) inter integrated circuit (I2C)) for connection, or an object 440 indicating a sensor (e.g., a Hall integrated circuit (IC)). For example, the input 310 may be an input for connecting the objects. For example, the input 310 may be an input for generating a connection 411 between the object 410 and the object 420. For example, the input 310 may be an input for generating a connection 413 between the object 420 and the object 430. For example, the input 310 may be an input for generating a connection 415 between the object 420 and the object 440. However, the disclosure is not limited thereto.

In operation 1320, the electronic device 201 may obtain an input for determining an attribute value between connected devices.

For example, the electronic device 201 may identify the input 310 for the connection 411 between an inport (e.g., GPIO pin) of the object 410 and an outport (e.g., GPIO pin) of the object 420. For example, the input 310 to the UI 501 may be an input for updating attributes and values to an inport object (e.g., RESET: GPIO expander, IRQ: GPIO expander) of the device description 260 related to the object 410.

For example, the electronic device 201 may identify the input 310 for the connection 413 between the inport (e.g., I2C pin) of the object 410 and the outport (e.g., I2C pin) of the object 430. For example, the input 310 to the UI 503 may add (or update) a statement for attributes and values to the inport object (e.g., IRQ: GPIO expander) of the device description 260 related to the object 410.

In operation 1330, the electronic device 201 may update the DTSIs based on the connection between the devices and the attribute value. For example, the electronic device 201 may update the DTSIs, based on the device description 320 updated according to the connection between the devices and the attribute value. For example, the electronic device 201 may additionally update the DTSIs through a wrapper for its associated hardware configuration (or vendor of the hardware configuration).

In operation 1340, the electronic device 201 may generate a DTS including updated DTSIs.

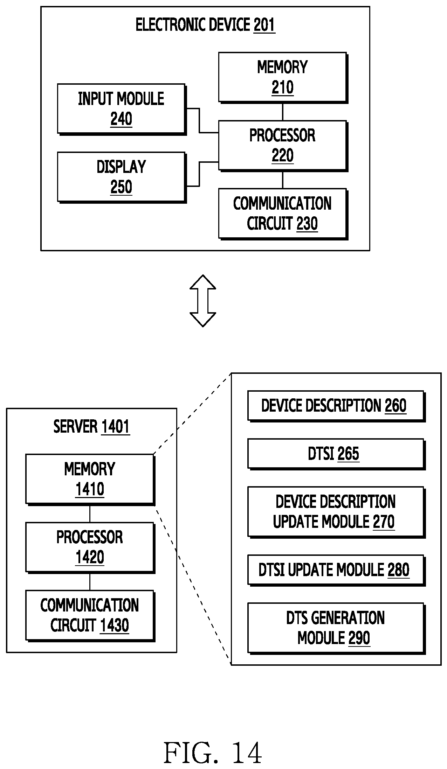

FIG. 14 is a block diagram of a server for providing a service for generating a DTS to an electronic device.

Compared to FIG. 2, in FIG. 14, the device description 260, the DTSI 265, the device description update module 270, the DTSI update module 280, and the DTS generation module 290 may be included in a server 1401.

For example, the electronic device 201 may transmit an input 310 for the UIs 400, 501, 503, and 505 displayed through a display 250, to a server 190 via a communication circuit 230.

For example, the server 1401 may update the device description 260 based on the input 310 obtained through a communication circuit 1430. For example, the server 1401 may update the DTSI 265 based on the updated device description 320 and/or the wrapper codes 901 and 905. For example, the server 1401 may generate a DTS based on the updated DTSI 330.

For example, the server 1401 may transmit the DTS including the updated DTSI 330 to the electronic device 201 via the communication circuit 1430.

As described above, the server 1401 may provide a web service (or cloud service) to the electronic device 201. For example, based on the input 310 from the electronic device 201, the server 1401 may generate a DTS file and may transmit the generated DTS file to the electronic device 201. Accordingly, the electronic device 201 may be less burdened with having the device description 260 and/or the DTSI 265 for a plurality of hardware configurations.

FIG. 15 is a block diagram of an electronic device 1501 in a network environment 1500.

Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module (SIM) 1596, or an antenna module 1597. In some embodiments, at least one of the components (e.g., the connecting terminal 1578) may be omitted from the electronic device 1501, or one or more other components may be added to the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to one embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546. Examples of operating systems include Unix^{™} and Linux^{™}.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

The connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to one embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, a RFIC disposed on a first surface (e.g., a bottom surface) of the printed circuit board, or adjacent to the first surface and capable of supporting a designated high-frequency band (e.g., the mmWave band), and a plurality of antennas (e.g., array antennas) disposed on a second surface (e.g., a top surface or a side portion) of the printed circuit board, or adjacent to the second surface and capable of transmitting or receiving signals of the designated high-frequency band.

At least some of the above-described components may be coupled to each other and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra-low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

As described above, an electronic device 201 may include a display 250, at least one processor 220 comprising processing circuitry, and memory 210 including one or more storage mediums, storing instructions. The instructions may, when executed by the at least one processor 220 individually or collectively, cause the electronic device 201 to, while displaying, via the display, a user interface (UI) 400 for generating a device tree source (DTS), obtain a first input 310 for displaying objects 410, 420, 430, and 440 representing a plurality of hardware configurations. The instructions may, when executed by the at least one processor 220 individually or collectively, cause the electronic device 201 to obtain a second input 310 for connections between the objects 410, 420, 430, and 440. The instructions may, when executed by the at least one processor 220 individually or collectively, cause the electronic device 201 to, based on the connections between the objects 410, 420, 430, and 440, update first properties of a device description 260 of each of the objects. The instructions may, when executed by the at least one processor 220 individually or collectively, cause the electronic device 201 to, based on the updated device description 320, update second properties of a device tree source include (DTSI) 265 of each of the objects 410, 420, 430, and 440. The instructions may, when executed by the at least one processor 220 individually or collectively, cause the electronic device 201 to generate a DTS including the updated DTSI 330 of each of the objects 410, 420, 430, and 440.

The instructions may, when executed by the at least one processor 220 individually or collectively, cause the electronic device 201 to identify a wrapper code corresponding to a manufacturer of a second object 420 connected to a first object 410. The instructions may, when executed by the at least one processor 220 individually or collectively, cause the electronic device 201 to update third properties of the DTSI 265 of the first object 410 based on the wrapper code.

The instructions may, when executed by the at least one processor 220 individually or collectively, cause the electronic device 201 to, after updating the second properties of the DTSI 265 of the first object 410, update the third properties based on the wrapper code.

The instructions may, when executed by the at least one processor 220 individually or collectively, cause the electronic device 201 to, based on a driver for the first object 410 being built, update the third properties based on the wrapper code.

The instructions may, when executed by the at least one processor 220 individually or collectively, cause the electronic device 201 to, based on that an inport of the first object 410 and an outport of the second object 420 are connected to each other, add a statement indicating a usrval attribute specified to the inport of a first device description 260 of the first object 410 and a value specified to the usrval attribute.

The instructions may, when executed by the at least one processor 220 individually or collectively, cause the electronic device 201 to update a value of parent attribute of the inport of the first device description 260 such that the value of the parent attribute of the inport of the first device description 260 of the first object 410 refers to a value of parent attribute of the outport of the second device description 701 of the second object 420. The instructions may, when executed by the at least one processor 220 individually or collectively, cause the electronic device 201 to update a value of the symbol attribute of the inport of the first device description 260 such that the value of the symbol attribute of the inport of the first device description 260 of the first object 410 refers to the value of value attribute of the outport of the second device description 701 of the second object 420.

The instructions may, when executed by the at least one processor 220 individually or collectively, cause the electronic device 201 to update second properties of DTSI 265 of the first object 410, based on the value of the parent property of the inport of the first device description 260 of the first object 410 and the value of the symbol property.

The instructions may, when executed by the at least one processor 220 individually or collectively, cause the electronic device 201 to, based on obtaining the second input 310, display another UI 501, 503, and 505 for updating the first properties.

A driver for each of the plurality of hardware configurations may be included in a subnode of a sibling node of a node of an application processor (AP).

As described above, a method may be performed by an electronic device 201 including a display 250. The method may include, while displaying, via the display 250, a user interface (UI) for generating a device tree source (DTS), obtaining a first input 310 for displaying objects 410, 420, 430, and 440 representing a plurality of hardware configurations. The method may include obtaining a second input 310 for connections 411, 413, and 415 between the objects 410, 420, 430, and 440. The method may include, based on the connections 411, 413, and 415 between the objects 410, 420, 430, and 440, updating first properties of a device description 260 of each of the objects 410, 420, 430, and 440. The method may include, based on the updated device description 320, updating second properties of a device tree source include (DTSI) 265 of each of the objects 410, 420, 430, and 440. The method may include generating a DTS including the updated DTSI 330 of each of the objects 410, 420, 430, and 440.

The method may include identifying a wrapper code corresponding to a manufacturer of a second object 420 connected to a first object 410. The method may include updating third properties of the DTSI 265 of the first object 410 based on the wrapper code.

The method may include, after updating the second properties of the DTSI 265 of the first object 410, updating the third properties based on the wrapper code.

The method may include, based on a driver for the first object 410 being built, updating the third properties based on the wrapper code.

The method may include, based on that an inport of the first object 410 and an outport of the second object 420 are connected to each other, adding a statement indicating a usrval attribute specified to the inport of a first device description 260 of the first object 410 and a value specified to the usrval attribute.

The method may include updating a value of parent attribute of the inport of the first device description 260 such that the value of the parent attribute of the inport of the first device description 260 of the first object 410 refers to the value of parent attribute of the outport of the second device description 701 of the second object 420. The method may include updating the value of the symbol attribute of the inport of the first device description 260 such that the value of the symbol attribute of the inport of the first device description 260 of the first object 410 refers to a value of value attribute of the outport of the second device description 701 of the second object 420.

The method may include updating second properties of DTSI 265 of the first object 410, based on the value of the parent property of the inport of the first device description 260 of the first object 410 and the value of the symbol property.

The method may include, based on obtaining the second input 310, displaying another UI 501, 503, and 505 for updating the first properties.

A driver for each of the plurality of hardware configurations may be included in a subnode of a sibling node of a node of an application processor (AP).

As described above, a non-transitory computer readable storage medium may store a program including instructions. The instructions may, when executed by at least one processor 220 of an electronic device 201 including a display 250, individually or collectively, cause the electronic device 201 to, while displaying, via the display 250, a user interface (UI) for generating a device tree source (DTS), obtain a first input 310 for displaying objects 410, 420, 430, and 440 representing a plurality of hardware configurations. The instructions may, when executed by the at least one processor 220 individually or collectively, cause the electronic device 201 to obtain a second input 310 for connections 411, 413, and 415 between the objects 410, 420, 430, and 440. The instructions may, when executed by the at least one processor 220 individually or collectively, cause the electronic device 201 to, based on the connections 411, 413, and 415 between the objects 410, 420, 430, and 440, update first properties of a device description 260 of each of the objects 410, 420, 430, and 440. The instructions may, when executed by the at least one processor 220 individually or collectively, cause the electronic device 201 to, based on the updated device description, update second properties of a device tree source include (DTSI) 265 of each of the objects 410, 420, 430, and 440. The instructions may, when executed by the at least one processor 220 individually or collectively, cause the electronic device 201 to generate a DTS including the updated DTSI 330 of each of the objects 410, 420, 430, and 440.

The instructions may, when executed by the at least one processor 220 individually or collectively, cause the electronic device 201 to identify a wrapper code corresponding to a manufacturer of a second object 420 connected to a first object 410. The instructions may, when executed by the at least one processor 220 individually or collectively, cause the electronic device 201 to update third properties of the DTSI 265 of the first object 410 based on the wrapper code.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, logic, logic block, unit, part, portion or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device (201), comprising:
a display (250),
at least one processor (220) comprising processing circuitry; and
memory (210), comprising one or more storage mediums, storing instructions,
wherein the instructions, when executed by the at least one processor (220) individually or collectively, cause the electronic device (201) to:
while displaying, via the display (250), a user interface, UI, (400) for generating a device tree source, DTS, obtain a first input (310) for displaying a plurality of objects (410, 420, 430, 440) representing a respective plurality of hardware configurations,
obtain a second input (310) representing connections (411, 413, 415) between the plurality of objects (410, 420, 430, 440),
based on the connections (411, 413, 415) between the plurality of objects (410, 420, 430, 440), update first properties of a device description (260) of each of the plurality of objects,
based on the updated device description (320), update second properties of a device tree source include, DTSI, (265) of each of the plurality of objects, and
generate a DTS including the updated DTSI (330) of each of the plurality of objects.

2. The electronic device (201) of claim 1,
wherein the instructions, when executed by the at least one processor (220) individually or collectively, cause the electronic device (201) to:
identify a wrapper code corresponding to a manufacturer of a second object (420) connected to a first object (410) of the plurality of objects, and
update third properties of the DTSI (265) of the first object (410) based on the wrapper code.

3. The electronic device (201) of claim 2,
wherein the instructions, when executed by the at least one processor (220) individually or collectively, cause the electronic device (201) to:
after updating the second properties of the DTSI (265) of the first object (410), update the third properties based on the wrapper code.

4. The electronic device (201) of claim 3,
wherein the instructions, when executed by the at least one processor (220) individually or collectively, cause the electronic device (201) to:
based on a driver for the first object (410) being built, update the third properties based on the wrapper code.

5. The electronic device (201) of claim 1,
wherein the instructions, when executed by the at least one processor (220) individually or collectively, cause the electronic device (201) to:
based on that an inport of the first object (410) and an outport of the second object (420) are connected to each other, add a statement indicating a usrval attribute specified to the inport of a first device description (260) of the first object (410) and a value specified to the usrval attribute.

6. The electronic device (201) of claim 1,
wherein the instructions, when executed by the at least one processor (220) individually or collectively, cause the electronic device (201) to:
update a value of parent attribute of an inport of a first device description (260) of the first object (410) such that the value of the parent attribute of the inport of the first device description (260) refers to a value of parent attribute of an outport of a second device description (701) of the second object (420), and
update a value of symbol attribute of the inport of the first device description (260) of the first object (410) such that the value of the symbol attribute of the inport of the first device description (260) of the first object (410) refers to a value of value attribute of the outport of the second device description (701) of the second object (420).

7. The electronic device (201) of claim 6,
wherein the instructions, when executed by the at least one processor (220) individually or collectively, cause the electronic device (201) to:
update the second properties of DTSI (265) of the first object (410), based on the value of the parent property of the inport of the first device description (260) of the first object (410) and the value of the symbol property.

8. The electronic device (201) of claim 1,
wherein the instructions, when executed by the at least one processor (220) individually or collectively, cause the electronic device (201) to:
based on obtaining the second input (310), display another UI (501, 503, 505) for updating the first properties.

9. The electronic device (201) of claim 1,
wherein a driver for each of the plurality of hardware configurations is included in a subnode of a sibling node of a node of an application processor, AP.

10. A method of an electronic device including a display, comprising:
while displaying, via the display, a user interface, UI, for generating a device tree source, DTS, obtaining (1310) a first input for displaying a plurality of objects representing a respective plurality of hardware configurations,
obtaining (1320) a second input representing connections between the plurality of objects,
based on the connections between the plurality of objects, updating first properties of a device description of each of the plurality of objects,
based on the updated device description, updating second properties of a device tree source include, DTSI, of each of the plurality of objects, and
generating (1340) a DTS including the updated DTSI of each of the plurality of objects.

11. The method of claim 10, comprising:
identifying a wrapper code corresponding to a manufacturer of a second object connected to a first object of the plurality of objects, and
updating third properties of the DTSI of the first object based on the wrapper code.

12. The method of claim 11, comprising:
after updating the second properties of the DTSI of the first object, updating the third properties based on the wrapper code.

13. The method of claim 12, comprising:
based on a driver for the first object being built, updating the third properties based on the wrapper code.

14. The method of claim 10, comprising:
based on that an inport of the first object and an outport of the second object are connected to each other, adding a statement indicating a usrval attribute specified to the inport of a first device description of the first object and a value specified to the usrval attribute.

15. A non-transitory computer readable storage medium, storing
a program including instructions,
wherein the instructions, when executed by at least one processor of an electronic device including a display individually or collectively, cause the electronic device to:
while displaying, via the display, a user interface, UI, for generating a device tree source, DTS, obtain a first input for displaying a plurality of objects representing a respective plurality of hardware configurations,
obtain a second input representing connections between the plurality of objects,
based on the connections between the plurality of objects, update first properties of a device description of each of the plurality of objects,
based on the updated device description, update the second properties of a device tree source include, DTSI, of each of the plurality of objects, and
generate a DTS including the updated DTSI of each of the plurality of objects.
